# EUROPÄISCHE PATENTSCHRIFT

(11) **EP 3 097 597 B1**
(45) Veröffentlichungstag und Bekanntmachung des Hinweises auf die Patenterteilung: **26.09.2018**
(21) Anmeldenummer: 14793132.3
(22) Anmeldetag: 04.11.2014
(51) Int. Cl.: H01M 2/02, H01M 2/38, H01M 10/42

(54) **MISCHELEMENT, SORTIMENT VON MISCHELEMENTEN UND AKKUMULATOR**
MIXING ELEMENT, RANGE OF MIXING ELEMENTS, AND ACCUMULATOR
ÉLÉMENT DE MÉLANGE, ENSEMBLE D'ÉLÉMENTS DE MÉLANGE ET ACCUMULATEUR

(30) Priorität: 24.01.2014 DE 102014100806
(43) Veröffentlichungstag der Anmeldung: 30.11.2016
(73) Patentinhaber: Johnson Controls Autobatterie GmbH & Co. KGaA, 30419 Hannover (DE)
(72) Erfinder: SCHWAB, Julius, 30449 Hannover (DE); KOCH, Ingo, 31789 Hameln (DE); DEHNERT, Nadine, 30926 Seelze (DE); WERLE, Thorsten, 31303 Burgdorf (DE)
(74) Vertreter: Trinks, Ole
(86) Internationale Anmeldenummer: PCT/EP2014/073661
(87) Internationale Veröffentlichungsnummer: WO 2015/110192

(56) Entgegenhaltungen:
- DE-U1- 9 115 597
- US-A- 5 032 476
- US-A1- 2012 214 032
- US-A1- 2013 202 949

## Beschreibung

Die Erfindung betrifft ein Mischelement, das zum Einbau in ein Gehäuse eines mit flüssigem Elektrolyten betriebenen elektrochemischen Akkumulators eingerichtet ist, gemäß dem Anspruch 1. Die Erfindung betrifft außerdem ein Sortiment von Mischelementen gemäß Anspruch 11 sowie einen Akkumulator mit wenigstens einem Mischelement gemäß dem Anspruch 12.

Allgemein betrifft die Erfindung das Gebiet von Akkumulatoren, die mit flüssigem Elektrolyten betrieben werden, d.h. wieder aufladbare elektrochemische Akkumulatoren z.B. in Form von Bleisäureakkumulatoren. Solche Akkumulatoren werden z.B. als Starterbatterien für Kraftfahrzeuge verwendet. Gattungsgemäße Mischelemente sind z.B. aus der WO 2011/029035 A2, der DE 10 2010 048 428 A1, der US 2013/0202949 A1, dem Gebrauchsmuster DE 91 15 597 U1 oder der US 5 032 476 A bekannt.

Der Erfindung liegt die Aufgabe zugrunde, ein universell einsetzbares Mischelement für einen elektrochemischen Akkumulator anzugeben. Ferner soll ein Sortiment von Mischelementen, die für unterschiedliche Akkumulatortypen geeignet sind, angegeben werden, sowie ein Akkumulator mit einem solchen Mischelement.

Die Aufgabe wird gemäß Anspruch 1 gelöst durch ein Mischelement, das zum Einbau in ein Gehäuse eines mit flüssigem Elektrolyten betriebenen elektrochemischen Akkumulators eingerichtet ist, um den Elektrolyten in Folge von auf den Akkumulator im Betrieb ausgeübten Kräften und/oder Bewegungen durchzumischen, wobei das Mischelement als an gegenüberliegenden Endbereichen mit jeweils wenigstens einer Öffnung versehener Hohlkörper ausgebildet ist, sodass in dem Hohlkörper ein Kanal gebildet ist, der in den gegenüberliegenden Endbereichen in die jeweilige wenigstens eine Öffnung mündet und dort umlaufend vom Material des Mischelements berandet ist, wobei das Mischelement eine oder mehrere Befestigungs- und/oder Abstandsrippen aufweist, die von der Außenseite des Mischelements fortstehen und zum Kontakt mit Gehäuseteilen des Akkumulators eingerichtet sind, um das Mischelement in dem Akkumulator zu fixieren und/oder eine bestimmte Position des Mischelements gegenüber den Gehäuseteilen festzulegen.

Soweit von den Begriffen "oben" und "unten" Gebrauch gemacht wird, beziehen sich diese Angaben auf die spezifikationsgemäße Betriebslage des Akkumulators, d.h. eine im Wesentlichen horizontale Lage, bei der der Akkumulator-Deckel sowie dessen Einfüllöffnungen für den flüssigen Elektrolyten oben liegend sind. Bei einer üblichen, spezifikationsgemäßen Bewegungsbeanspruchung des Akkumulators ist eine gewisse Abweichung von der Horizontallage zulässig, wie es z.B. beim Betrieb eines Akkumulators in einem Kraftfahrzeug auftritt. Nicht spezifikationsgemäße Betriebslagen sind beispielsweise um 90° oder 180° gegenüber der Horizontallage gedrehte Lagen.

Die Erfindung hat den Vorteil, dass das erfindungsgemäße Mischelement durch seine außen angeordneten, von der Außenseite des Mischelements fortstehenden Befestigungs- und/oder Abstandsrippen universell für alle möglichen Typen, Größen und Bauarten von elektrochemischen Akkumulatoren eingesetzt werden kann. Die Befestigungs- und/oder Abstandsrippen vereinfachen die Befestigung des Mischelements in einem Zellraum des Akkumulators. Auch das Einsetzen des Mischelements in den Zellraum wird vereinfacht. Zudem kann durch die Befestigungs- und/oder Abstandsrippen eine definierte Positionierung sichergestellt werden, sodass die Montage auch für weniger geübtes Personal einfach und schnell durchführbar ist. Auch für die automatisierte Produktion von Akkumulatoren ist die verbesserte Konstruktion des Mischelements mit den Befestigungs- und/oder Abstandsrippen vorteilhaft. Für unterschiedliche Typen, Baugrößen und Formen von Akkumulatoren muss dabei nicht das gesamte Mischelement konstruktiv geändert werden, sondern lediglich die Dimensionen von einer oder mehreren äußeren Befestigungs- und/oder Abstandsrippen. Die für die Durchmischfunktion des Mischelements wesentlichen Proportionen bleiben gleich, sodass auch die Funktion und Wirksamkeit des Mischelements nicht verändert wird. Der zentrale Funktionskörper des Mischelements kann damit einheitlich konstruiert und realisiert werden, sodass er über die Variationen der Halterippen in unterschiedlichen Akkumulatorgrößen immer wieder verwendet und eingebaut werden kann. Insbesondere kann das Mischelement ohne stoffschlüssige Verbindungsverfahren in dem Gehäuse des Akkumulators montiert werden, z.B. durch Festklemmen mittels einer, mehrerer oder aller Befestigungs- und/oder Abstandsrippen.

Gemäß einer vorteilhaften Weiterbildung der Erfindung ist das Mischelement stapelbar mit anderen Mischelementen ausgebildet. Hierzu ist das Mischelement von seiner geometrischen Form so gestaltet, dass es zumindest teilweise in ein anderes Mischelement einschiebbar und somit mehrere Mischelemente ineinander stapelbar sind. Diese Stapelbarkeit verringert den Platzbedarf bei der Lagerung der Mischelemente und ermöglicht eine bessere Verarbeitung in der automatisierten Montage von Akkumulatoren.

Gemäß einer vorteilhaften Weiterbildung der Erfindung ist vorgesehen, dass das Mischelement im Bereich eines oberen Endbereichs, der dazu eingerichtet ist, beim Einbau in das Gehäuse oberhalb eines gegenüberliegenden unteren Endbereichs angeordnet zu sein, einen Volumenraum aufweist, dessen Umfang erheblich größer ist als der Umfang darunterliegende Abschnitte des Mischelements, sodass die darunterliegenden Abschnitte des Mischelements wenigstens einen im Vergleich zur Querschnittsfläche des Volumenkörpers dünnen Strömungskanal bilden. Dies hat den Vorteil, dass mit dem erfindungsgemäßen Mischelement das gewünschte Durchmischen des Elektrolyten weiter verbessert wird. Hierdurch kann eine Säureschichtung in dem Akkumulator aufgehoben oder zumindest deutlich reduziert werden. Als Säureschichtung bezeichnet man unterschiedliche Säuredichten über die Höhe des Akkumulators. Das erfindungsgemäße Mischelement erlaubt ein Durchmischen des Elektrolyten mit höherer Wirkungseffizienz in Folge der Umfangsverringerung und der damit verbundenen Verringerung des Strömungsquerschnitts des Hohlkörpers im Bereich des dünnen Strömungskanals. Das erfindungsgemäße Mischelement erzeugt schon bei geringerer Bewegungsbeanspruchung des Akkumulators vergleichbare Durchmischeffekte wie Mischelemente aus dem Stand der Technik.

Das Mischelement kann z.B. aus Polypropylen oder einem anderen geeigneten Material, das flexibel und säurebeständig ist, hergestellt sein.

Das erfindungsgemäße Mischelement kann hinsichtlich seiner Höhe, d.h. seiner Längserstreckung in Vertikalrichtung in der vorgesehenen Einbaulage in den Akkumulator, so ausgebildet sein, dass sich ein zyklischer Umlauf des Elektrolyten bei Bewegungsbeanspruchung des Akkumulators derart ergibt, dass Elektrolyt über die Oberkante des Mischelements hinüberschwappt und über die untere Öffnung wieder abläuft, wie es z.B. in US 5,096,787 beschrieben ist. In diesem Fall hat das Mischelement die Funktion einer hydrostatischen Pumpe.

Gemäß einer vorteilhaften Weiterbildung der Erfindung erstreckt sich das Mischelement mindestens soweit nach oben, dass bei spezifikationsgemäßer Bewegungsbeanspruchung des Akkumulators, wie sie z.B. bei einem fahrenden Fahrzeug auftritt, ein Überfließen von flüssigem Elektrolyten über den oberen Randbereich des Mischelements verhindert ist. Hierdurch kann vorteilhaft das Prinzip von kommunizierenden Röhren realisiert werden. Es wird eine Hin- und Herbewegung des Elektrolyten über eine kommunizierende Verbindung im unteren Bereich des Mischelements, d.h. durch die untere Öffnung, zwischen dem Volumenraum des Mischelements und dem umgebenden Zellraum des Akkumulators erzwungen und nicht, wie beim Prinzip der hydrostatischen Pumpe, ein Umwälzen des Elektrolyten. Dies hat den Vorteil, dass am Boden des Akkumulators angesammelter Schlamm dort verbleibt, da keine Umwälzung des Elektrolyten erfolgt. Die hierdurch erzwungene Elektrolytbewegung ist ausreichend, um den Elektrolyten soweit durchzumischen, dass eine Säureschichtung aufgehoben oder zumindest deutlich reduziert wird.

Die kommunizierende Verbindung im unteren Bereich des Mischelements, d.h. die untere Öffnung, durch den der flüssige Elektrolyt hindurchströmen kann, kann auf unterschiedliche Weise ausgestaltet sein, z.B. in Form eines Spalts oder in Form einer oder mehrerer Öffnungen im unteren Bereich des Mischelements. Die zuvor erwähnten Öffnungen können an verschiedenen Stellen des Mischelements angeordnet sein, vorzugsweise natürlich im unteren Bereich des Strömungskanals.

Gemäß einer vorteilhaften Weiterbildung der Erfindung ist das Mischelement als separates Bauteil hergestellt, das erst bei der Montage des Akkumulators in dessen Gehäuse eingesetzt wird. Das Mischelement kann z.B. als in einen Zellraum des Akkumulators einsteckbares Bauteil ausgebildet sein. Dies hat den Vorteil, dass das Mischelement separat hergestellt werden kann und bei Bedarf in den Zellraum eines Akkumulators eingesteckt werden kann. Auf diese Weise können auf kostengünstige Weise sowohl Akkumulatoren mit dem Mischelement als auch ohne das Mischelement hergestellt werden, ohne dass unterschiedliche Spritzgussformen für die Herstellung der Gehäuseteile der zwei Varianten des Akkumulators erforderlich wären, wie dies bei einem fest angeformten Wandelements erforderlich wäre. Zudem können auch Akkumulatoren aus bisheriger Serienfertigung in einfacher Weise, d.h. ohne große Aufwendungen bezüglich der Herstellungseinrichtungen, umgestellt werden auf Akkumulatoren mit integrierter Durchmischung in Form eines Mischelements.

Das Mischelement kann insbesondere als ringförmiger Hohlkörper ausgebildet sein, wobei als Ringform in diesem Fall nicht ausschließlich eine Kreisringform verstanden wird, sondern auch jegliche anders geformte Ringformen. Das Mischelement kann z.B. als mit Ausnahme der in den gegenüberliegenden Endbereichen vorgesehenen Öffnungen im Wesentlichen geschlossener Hohlkörper ausgebildet sein. Dies erlaubt eine einfache Herstellung des Mischelements, z.B. aus einem Kunststoffmaterial.

Vorteilhaft kann das Mischelement z.B. im Spritzgussverfahren mit einem Innendorn und einer Außenform hergestellt werden. Das Mischelement kann auch im Blasverfahren oder im Tiefziehverfahren als Hohlkörper hergestellt werden. Der sich hinsichtlich des Umfangs in Richtung zum unteren Endbereich hin verjüngende dünne Strömungskanal hat in diesem Zusammenhang den weiteren Vorteil, dass die Entformbarkeit des Mischelements beim Herstellprozess verbessert wird.

Gemäß einer vorteilhaften Weiterbildung der Erfindung verläuft die Umfangsverringerung im Bereich des dünnen Strömungskanals über die Längserstreckung des Mischelements diskontinuierlich mit einer oder mehreren Diskontinuitäten. Hieraus resultiert eine Art stufenartige Verringerung des Umfangs des Hohlkörpers. Hierdurch kann die Wirkungseffizienz des Mischelements hinsichtlich des durch Durchmischungseffekts des flüssigen Elektrolyten weiter verbessert werden. Durch das Vorsehen von einer oder mehreren Diskontinuitäten im Verlauf des Strömungskanals ergeben sich abgestuft ein oder mehrere Übergänge des Strömungswiderstands und damit der Verlangsamung oder Beschleunigung des Austauschs des Elektrolyten zwischen dem Volumenraum des Mischelements und dem Innenraum des Akkumulators. Vorteilhaft können im Bereich des dünnen Strömungskanals z.B. zwei oder drei solche Diskontinuitäten vorgesehen werden. Auch die Entformbarkeit des Mischelements beim Herstellprozess wird durch die Diskontinuitäten weiter verbessert.

Gemäß einer vorteilhaften Weiterbildung der Erfindung verlaufen eine oder mehrere Diskontinuitäten über die Längserstreckung des Mischelements linear, d.h. je nach Ausführungsform verläuft in diesen Bereichen die Umfangsverringerung oder die Querschnittsverringerung linear. Dies erlaubt eine einfache und kostengünstige Herstellung des Mischelements. Außerdem wird die mechanische Stabilität des dünnen Strömungskanals verbessert.

Gemäß einer vorteilhaften Weiterbildung der Erfindung weist das Mischelement wenigstens zwei voneinander getrennte dünne Strömungskanäle auf, die mit dem gemeinsamen Volumenraum verbunden sind. Es können einer, mehrere oder alle der voneinander getrennten dünnen Strömungskanäle gemäß den zuvor erwähnten Merkmalen des dünnen Strömungskanals ausgebildet sein, insbesondere mit einer oder mehreren Diskontinuitäten.

Gemäß der Erfindung weist das Mischelement zumindest an einer Seite des Hohlkörpers eine Einbuchtung auf, die in Längsrichtung des Mischelements verläuft und zur Aufnahme einer Gehäuserippe des Akkumulators eingerichtet ist. Dies erlaubt eine einfache und sichere mechanische Befestigung des Mischelements in dem Akkumulatorgehäuse, sofern dieses mit inneren Gehäuserippen ausgebildet ist. In diesem Fall sind keine zusätzlichen mechanischen Fixierungsmittel erforderlich. Die Einbuchtung kann insbesondere im Bereich des Volumenraums vorgesehen sein bzw. sich bis in diesen Raum erstrecken, so dass der Volumenraum geteilt ist.

Gemäß einer vorteilhaften Weiterbildung der Erfindung ist die Tiefe der Einbuchtung wenigstens so groß wie die Erstreckung des dünnen Strömungskanals in derselben Richtung, d.h. in Ersteckungsrichtung der Einbuchtung. Dies erlaubt eine besonders robuste mechanische Fixierung des Mischelements an der Gehäuserippe des Gehäuses des Akkumulators. Außerdem werden hierdurch wenigstens zwei getrennte dünne Strömungskanäle geschaffen.

Gemäß einer vorteilhaften Weiterbildung der Erfindung weist das Mischelement wenigstens eine in Richtung zum Gehäusedeckel des Gehäuses des Akkumulators fortstehende Befestigungs- und/oder Abstandsrippe auf. Mittels einer solchen Befestigungs- und/oder Abstandsrippe kann die Position des Mischelements relativ zum Gehäusedeckel festgelegt werden und zudem das Mischelement gegenüber dem Gehäusedeckel fixiert werden.

Gemäß einer vorteilhaften Weiterbildung der Erfindung weist das Mischelement wenigstens eine in Richtung zum Gehäuseboden des Gehäuses des Akkumulators fortstehende Befestigungs- und/oder Abstandsrippe auf. Diese Befestigungs- und/oder Abstandsrippe kann z.B. an der Unterseite des Volumenraums am Mischelement angeordnet sein. Mittels der in Richtung zum Gehäuseboden des Gehäuses des Akkumulators fortstehenden Befestigungs- und/oder Abstandsrippe kann eine definierte Positionierung und Befestigung des Mischelements nach unten hin erfolgen. So kann die nach unten fortstehende Befestigung- und/oder Abstandsrippe auf den Elektroden bzw. den die Elektroden umhüllenden Separatoren aufsitzen. Hierdurch wird die Einbauhöhe des Mischelements im Gehäuse definiert.

Gemäß einer vorteilhaften Weiterbildung der Erfindung weist das Mischelement am Außenumfang an einer, mehreren oder allen seinen zu Seitenwänden des Gehäuses des Akkumulators gerichteten Außenseiten eine oder mehrere Befestigungs- und/oder Abstandsrippen auf. Dies hat den Vorteil, dass das Mischelement an einer definierten horizontalen Position in einem Freiraum eines Zellraums angeordnet werden kann. Eine Fehlmontage an einer falschen Position kann hierdurch vermieden werden. Als Seitenwände des Gehäuses des Akkumulators werden dabei sowohl die seitlichen Außenwände des Akkumulators als auch Innenwände im Gehäuse des Akkumulators, die Trennwände zwischen verschiedenen Zellräumen darstellen, angesehen. Das Mischelement kann bei einem in einer Ansicht von oben im Wesentlichen viereckigen Außenquerschnitt an allen vier Außenseiten jeweils eine oder mehrere Befestigungs- und/oder Abstandsrippen aufweisen, oder nur an einigen oder nur einer Außenseite.

Gemäß einer vorteilhaften Weiterbildung der Erfindung sind eine oder mehrere Befestigungs- und/oder Abstandrippen innerhalb der zuvor erläuterten Einbuchtung angeordnet. Es können insbesondere eine oder mehrere Befestigungs- und/oder Abstandsrippen jeweils aneinander gegenüberliegenden Außenseiten des Mischelements innerhalb der Einbuchtung angeordnet sein. Durch solche innerhalb der Einbuchtung angeordneten Befestigungs- und/oder Abstandsrippen kann das Mischelement keilartig gegen eine innere Gehäuserippe des Gehäuses des Akkumulators gepresst und an dieser Gehäuserippe befestigt werden. Hierzu können die innerhalb der Einbuchtung vorgesehenen Befestigungs- und/oder Abstandsrippen eine in Einsteckrichtung auf die Gehäuserippe ansteigende Außenkontur aufweisen, sodass die Außenkontur gegenüber der Gehäuserippe eine Keilform bildet.

Gemäß einer vorteilhaften Weiterbildung der Erfindung sind wenigstens zwei Befestigungs- und/oder Abstandsrippen paarweise V-förmig zueinander angeordnet. Dies hat den Vorteil, dass durch die V-förmige Konstruktion ein Abknicken der Abstandsrippen bei der Montage in dem Gehäuse oder beim späteren praktischen Betrieb des Akkumulators verhindert werden kann. Die paarweise V-förmig zueinander angeordneten Befestigungs- und/oder Abstandsrippen können sich dabei treffen und zu einer V-förmigen Rippe vereinigen oder in einem gewissen Abstand voneinander angeordnet sein.

Die eingangs genannte Aufgabe wird gemäß Anspruch 11 gelöst durch ein Sortiment von Mischelementen der zuvor beschriebenen Art, wobei das Sortiment verschieden ausgebildete Mischelemente aufweist, die sich durch die Anordnung und/oder die Maße der Befestigungs- und/oder Abstandsrippen voneinander unterscheiden. Auf diese Weise können für unterschiedliche Akkumulatortypen, Größen und Bauarten jeweils passende Mischelemente bereitgehalten werden, ohne dass weitere Anpassungen erforderlich sind. Das jeweilige Mischelement, das zum Akkumulatortyp passt, kann dabei ohne stoffschlüssige Verfahren montiert werden und nur durch Festklemmen an Gehäusewänden und/oder Gehäuserippen des Gehäuses des Akkumulators mittels der Befestigungs- und/oder Abstandsrippen fixiert werden.

Die eingangs genannte Aufgabe wird gemäß Anspruch 12 gelöst durch einen Akkumulator mit einem Gehäuse, in dem wenigstens eine Akkumulatorzelle gebildet ist, wobei die Akkumulatorzelle eine Vielzahl von plattenförmigen Elektroden, die nebeneinander in der Akkumulatorzelle angeordnet sind, sowie flüssigen Elektrolyten aufweist, wobei in der Akkumulatorzelle zusätzlich in einem Freiraum wenigstens ein Mischelement der zuvor beschriebenen Art angeordnet ist. Bei dem erfindungsgemäßen Akkumulator wird bereits bei vergleichsweise geringer Bewegungsbeanspruchung ein hoher Durchmischungseffekt erzeugt und damit die Säureschichtung vermieden oder zumindest wesentlich reduziert.

Gemäß einer vorteilhaften Weiterbildung der Erfindung ist das Mischelement seitlich von einer flachen Seite einer plattenförmigen Elektrode in der Akkumulatorzelle angeordnet. Das Mischelement wird hierdurch nicht von den hervorstehenden, zusammengeschweißten Enden der Separatortaschen kraftbeaufschlagt bzw. gehalten, wie in DE 10 2010 048 428 A1 beschrieben, da es an der flachen Seite der plattenförmigen Elektrode angeordnet ist. Gemäß einer vorteilhaften Weiterbildung der Erfindung kann als Haltemittel zur mechanischen Fixierung des Mischelements in der Akkumulatorzelle ein in das Gehäuse des Akkumulators integriertes Bauteil vorgesehen sein. Insbesondere kann eine innere Gehäuserippe des Gehäuses des Akkumulators als Haltemittel genutzt werden.

Das Mischelement kann auch mit einem bekannten Fügeverfahren, z.B. Kunststoff-Schweißen, mit dem Gehäuse des Akkumulators bzw. der inneren Gehäuserippe verbunden sein und hierdurch lagefixiert sein.

Gemäß einer vorteilhaften Weitebildung der Erfindung ist das Mischelement zwischen einer plattenförmigen Elektrode und der Gehäusewand oder einer an der Gehäusewand gebildeten inneren Gehäuserippe angeordnet.

Gemäß einer vorteilhaften Weitebildung der Erfindung weist das Gehäuse eine Längserstreckung auf, die die größte Abmessung der Maße Höhe, Breite und Länge des Gehäuses ist, und die Elektrodenplatten weisen eine Längserstreckung auf, die die größte Abmessung der Maße Höhe, Breite und Länge der einzelnen Elektrodenplatte ist, und die Elektrodenplatten in einer Akkumulatorzelle sind derart ausgerichtet, dass die Längserstreckung der Elektrodenplatten im Wesentlichen in Richtung der Längserstreckung des Gehäuses verläuft. Dies erlaubt eine günstige, den vorhandenen Bauraum gut ausnutzende Unterbringung einer hohen Zahl von Elektrodenplatten in dem Gehäuse bei gleichzeitiger günstiger Unterbringung von einem oder mehreren Mischelementen in dem Gehäuse.

Die Erfindung wird nachfolgend anhand von Ausführungsbeispielen unter Verwendung von Zeichnungen näher erläutert.

Es zeigen
- Figur 1: einen Akkumulator mit einem Mischelement in Querschnittsansicht und
- Figuren 2 und 3: den Akkumulator gemäß Figur 1 bei Bewegungsbeanspruchung und
- Figuren 4 bis 6: eine erste nicht-erfindungsgemäße Ausführungsform eines Mischelements ohne äußere Rippen und
- Figuren 7 bis 9: eine zweite nicht-erfindungsgemäße Ausführungsform eines Mischelements ohne äußere Rippen und
- Figuren 10 bis 11: eine dritte erfindungsgemäße Ausführungsform eines Mischelements mit äußeren Rippen und
- Figuren 12 bis 13: eine vierte erfindungsgemäße Ausführungsform eines Mischelements mit äußeren Rippen und
- Figuren 14 bis 17: seitliche Ansichten von Akkumulatoren in Schnittdarstellung und
- Figur 18: einen Akkumulator in Draufsicht und
- Figur 19: stapelbare Mischelemente.

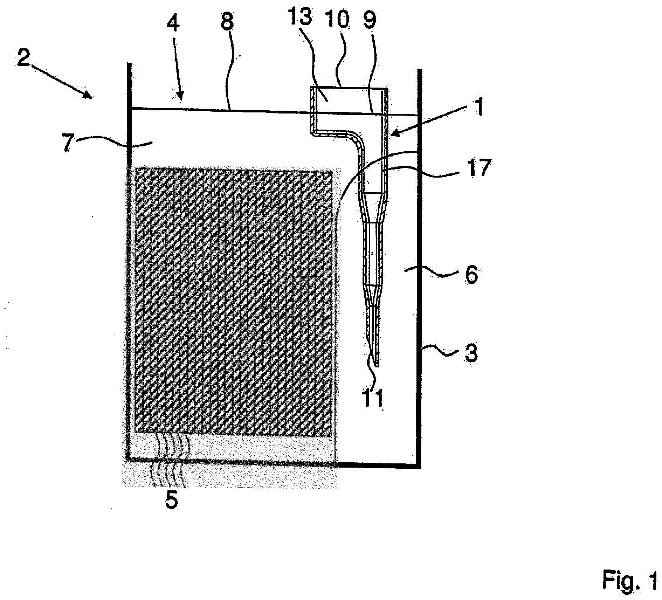

In den Figuren werden gleiche Bezugszeichen für einander entsprechende Elemente verwendet. In den Figuren 1 bis 3 und 18 wird der Akkumulator ohne Deckelteil dargestellt, d.h. in einem Zustand, in dem der Akkumulator an der Oberseite noch geöffnet ist. Zum Abschluss der Produktion erfolgt im Normalfall ein Verschließen des Akkumulatorgehäuses mit einem Deckeiteil in der üblichen Weise.

Die Figur 1 zeigt einen Akkumulator 2, in dessen Gehäuse 3 ein Mischelement 1 angeordnet ist. In dem Gehäuse 3 bzw. einem Zellraum 4 des Gehäuses sind außerdem Elektrodenplatten 5 angeordnet, die zum Teil mit nicht dargestellten Separatoren umgeben sind. Außerdem befindet sich in dem Gehäuse 3 bzw. dem Zellraum 4 flüssiger Elektrolyt 7, wobei der Elektrolyt 7 bis zu einem Pegel 8 eingefüllt ist. Ferner befindet sich in dem Gehäuse 3 bzw. in dem Zellraum 4 eine Gehäuserippe 6. Das Mischelement 1 ist an der Gehäuserippe 6 befestigt, z.B. darauf aufgeklemmt.

Wie erkennbar ist, weist das Mischelement 1 im oberen Endbereich einen Volumenraum 13 auf, der nach unten hin in einen dünnen Strömungskanal 17 übergeht, der eine vergleichsweise wesentlich geringere Querschnittsfläche aufweist als der Volumenraum 13. Der Strömungskanal 17 endet in einem unteren Bereich des Mischelements in einer oder mehreren Öffnungen 11. Der Volumenraum 13 ist nach oben hin ebenfalls offen, d.h. dort befindet sich eine Öffnung 10. Wegen der oberen und der unteren Öffnungen 10, 11 ist jederzeit ein Druckausgleich zwischen dem Innenraum des Mischelements 1 und dem umgebenden Raum des Akkumulatorgehäuses 3 möglich. Es stellt sich in dem Mischelement 1 daher ein Elektrolytpegel 9 ein, der dem Elektrolytpegel 8 des Akkumulators 2 bzw. des jeweiligen Zellraums 4 entspricht.

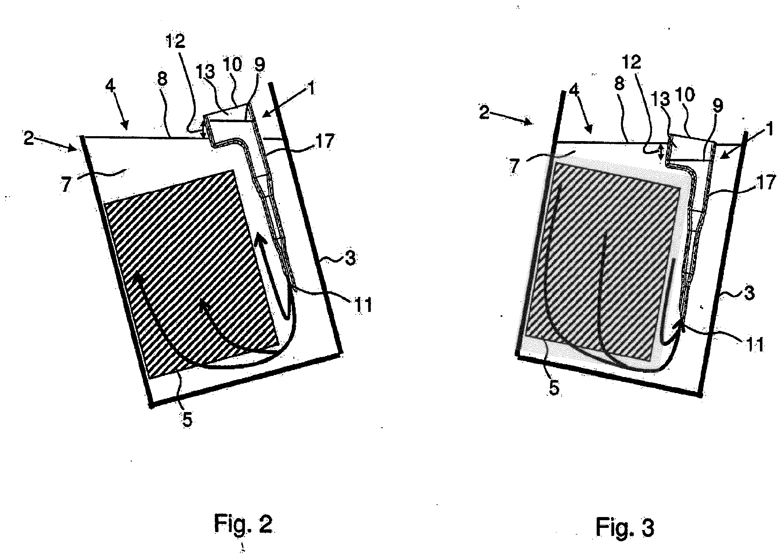

Die Figuren 2 und 3 zeigen die Funktion des Mischelements 1 bei einer Bewegungsbeanspruchung des Akkumulators 2. Gemäß Figur 2 wird der Akkumulator um einen bestimmten Winkel nach links gekippt. Aus den ursprünglich gleich hohen Pegeln 8, 9 ergibt sich aufgrund dieser Kippung zunächst eine Pegeldifferenz 12, da der im Mischelement 1 gespeicherte Elektrolyt durch den dünnen Strömungskanal 17 nur verzögert ausfließen kann. Das Ausfließen des Elektrolyten in den Zellraum 4 des Akkumulators wird durch die Pfeile dargestellt. Es sei nun angenommen, dass der Ausgleichsvorgang des gemäß Figur 2 nach links gekippten Akkumulators abgeschlossen ist, so dass der Pegel 9 im Mischelement wieder dem Pegel 8 entspricht. Sodann sei angenommen, dass der Akkumulator nun z.B. etwas nach rechts gekippt wird, wie in Figur 3 dargestellt ist. Es ergibt sich erneut eine Pegeldifferenz 12 zwischen den Pegeln 8, 9, diesmal jedoch in umgekehrter Richtung, d.h. gemäß Figur 3 ist der Pegel 9 niedriger als der Pegel 8. Dies führt dazu, dass durch die Öffnung 11 wieder Elektrolyt in das Mischelement 1 zurückströmt, wie durch die Pfeile dargestellt ist. Hierdurch wird ein Durchmischen des Elektrolyten erreicht und damit die Säureschichtung vermieden oder reduziert. Vorteilhaft ist das Mischelement 1 dabei hinsichtlich der Wandhöhe des Volumenraums 13 so hoch gebaut, dass ein Überschwappen von Elektrolyten bei normaler Bewegungsbeanspruchung über die Oberkante des Mischelements 1 direkt in den Volumenraum 13 vermieden wird. Ein solches Überschwappen wird bei spezifikationsgemäßer Befüllung des Akkumulators bis zu einem Kippwinkel von 20° gegenüber der Horizontalen gewährleistet. In einer weiteren Ausgestaltung wird das Überschwappen des Elektrolyten bis zu einem Kippwinkel von 35° gegenüber der Horizontalen gewährleistet.

Die Bewegungsbeanspruchung des Akkumulators 2 wird im Alltagsbetrieb, d.h. wenn der Akkumulator 2 in einem Fahrzeug eingebaut ist, z.B. durch die Fahrzeugbewegungen hervorgerufen. Außer den Fahrzeugbewegungen, die durch Fahrbahnunebenheiten hervorgerufen werden, führen auch Längs- und Querbeschleunigungen, z.B. bei Kurvenfahrt, zur beschriebenen Bewegungsbeanspruchung des Akkumulators 2.

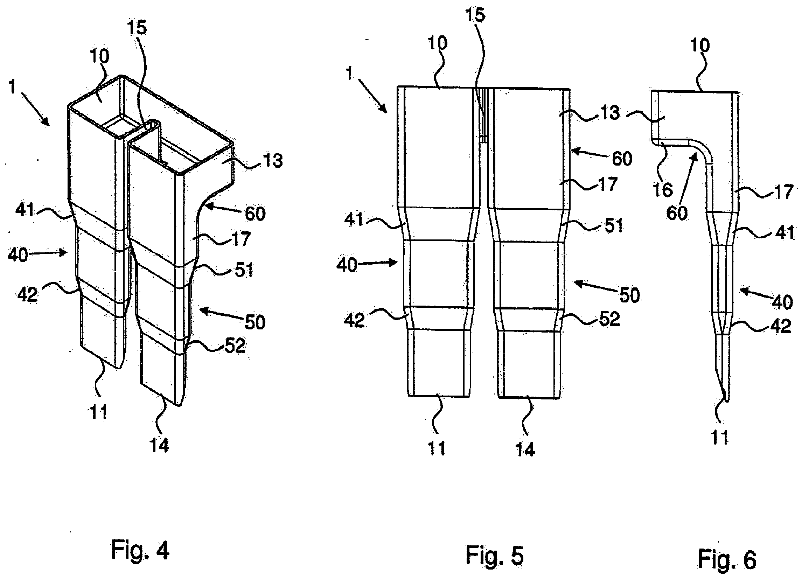

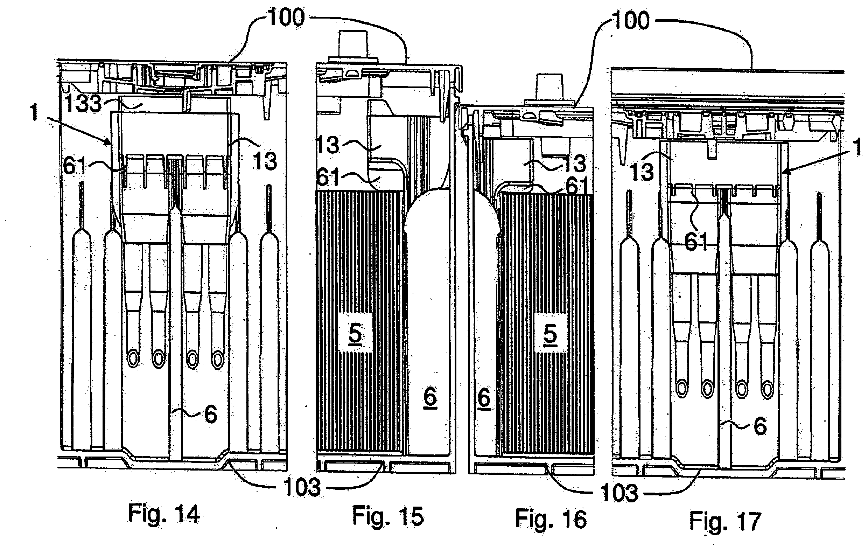

Die Figuren 4 bis 6 zeigen eine erste nicht-erfindungsgemäße Ausführungsform des Mischelements 1. Die Figur 4 zeigt dabei eine isometrische Ansicht, die Figur 5 eine rückseitige Ansicht und die Figur 6 eine Seitenansicht. Wie erkennbar ist, weist das Mischelement 1 eine Einbuchtung 15 auf, die den Volumenraum 13 in zwei Teilräume unterteilt, die jedoch mit relativ großem Querschnitt miteinander verbunden sind. Die Einbuchtung 15 kann zur Montage des Mischelements 1 auf der Gehäuserippe 6 dienen, wie in Figur 1 und Figur 16 erkennbar ist. Das Mischelement kann einfach auf die Gehäuserippe aufgesteckt werden und klemmt dann mittels der Einbuchtung 15 darauf fest.

Der Volumenraum 13 ist nach unten hin durch einen Boden 16 begrenzt. Der Volumenraum 13 ist nach oben hin durch die Öffnung 10 offen ausgebildet. Der Volumenraum 13 geht unterhalb des Bodens 16 in einem Übergangsbereich 60 über in einen dünnen Strömungskanal 17, der sich nach unten hin bis zu einer Öffnung 11 hin erstreckt. Wegen der Teilung durch die Einbuchtung 15 teilt sich der dünne Strömungskanal 17 in zwei Teilkanäle 40, 50 auf, die jeweilige untere Öffnungen 11, 14 aufweisen. Die Öffnungen 11, 14 können als einzelne Öffnungen oder als Kombination mehrerer Öffnungen ausgebildet sein. Das Mischelement kann im Bereich der Öffnungen 11, 14 gerade oder, wie in den Figuren erkennbar ist, mit einer Abschrägung enden.

Wie ferner in den Zeichnungen erkennbar ist, weist der dünne Strömungskanal 17 bzw. die Teilkanäle 40, 50 unterhalb des Übergangs 60 zwei linear verlaufende Diskontinuitäten 41, 42, 51, 52 auf. Durch diese Diskontinuitäten verringert sich der Umfang und damit auch die innere Querschnittsfläche des Hohlkörpers zweifach in Richtung des unteren Endbereichs hin zu der Öffnung 11, 14.

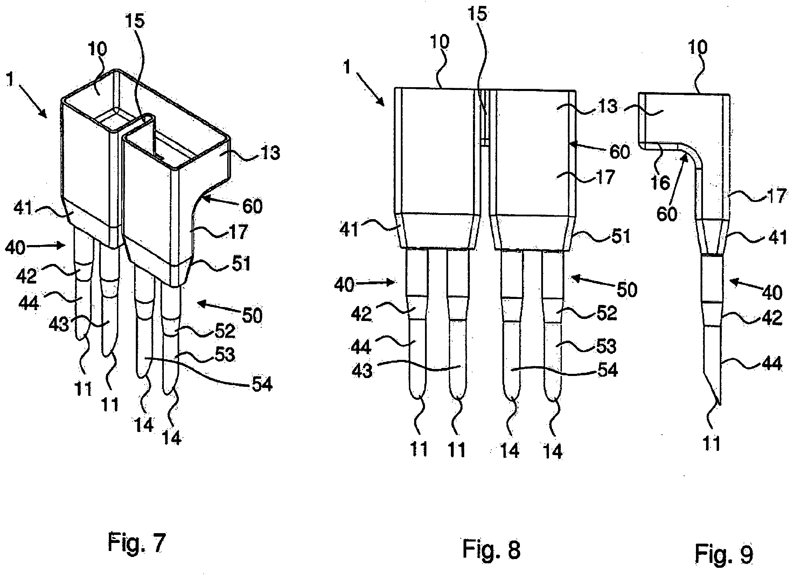

Die Figuren 7 bis 9 zeigen eine zweite nicht-erfindungsgemäße Ausführungsform des Mischelements 1. Die Figur 7 zeigt eine isometrische Ansicht, die Figur 8 eine rückwärtige Ansicht und die Figur 9 eine Seitenansicht. Im Unterschied zu dem Mischelement gemäß den Figuren 4 bis 6 weist das hier dargestellte Mischelement 1 in den unteren Bereichen der Strömungskanäle 40, 50 jeweils weiter aufgeteilte Teilkanäle 43, 44, 53, 54 auf, z.B. in Form von Kanälen mit kreisförmigem Querschnitt. Jeder der Teilkanäle 43, 44, 53, 54 weist eine eigene umfangsverringernde Diskontinuität 42, 52 sowie eine untere Öffnung 11, 14 auf.

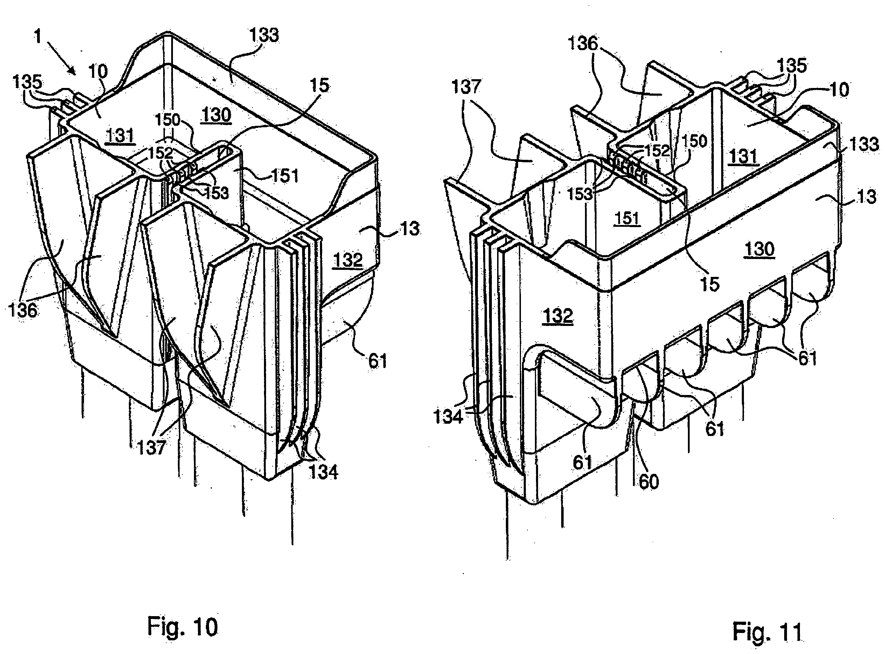

Anhand der Figuren 1 bis 9 wurde die prinzipielle Funktion und Formgebung des erfindungsgemäßen Mischelements anhand von nicht-erfindungsgemäßen Ausführungsbeispielen erläutert, in denen das Mischelement keine Befestigungs- und/oder Abstandsrippen, die nachfolgend nur kurz als Rippen bezeichnet werden sollen, aufweist. Anhand der nachfolgend erläuterten Figuren 10 bis 19 werden erfindungsgemäße Mischelemente beschrieben, die die entsprechenden äußeren Rippen aufweisen.

Die Figuren 10 und 11 zeigen in zwei unterschiedlichen isometrischen Ansichten ein Mischelement 1, das dem Mischelement gemäß den Figuren 7 bis 9 entspricht und zusätzlich äußere Rippen aufweist. Dargestellt ist jeweils nur der mit den Rippen versehene obere Bereich des Mischelements, die unten liegenden Abschnitte entsprechen den Figuren 7 bis 9. Die nachfolgend erläuterten Ausführungsformen von Mischelementen mit Rippen können allerdings auch hinsichtlich der unten liegenden Strömungskanäle in beliebiger Weise anders ausgestaltet sein, z.B. gemäß den Figuren 4 bis 6 oder ähnlich.

Das Mischelement 1 gemäß den Figuren 10 und 11 weist an der Oberkante der Rückwand 30 des Volumenraums 13 eine nach oben hin fortstehende Rippe 133 auf, die sich an den Enden abgewinkelt bis hin zur Seitenwandbereichen 131, 132 des Volumenraums 13 hin erstrecken kann. Die Rippe 133 erstreckt sich in Richtung zu einem Gehäusedeckel des Gehäuses des Akkumulators, sodass das Mischelement 1, wenn es in dem Gehäuse eingesetzt ist, vom Gehäusedeckel über die Rippe 133 in vertikaler Richtung fixiert werden kann.

Für die zusätzliche vertikale Fixierung nach unten hin sind an der Unterseite 60 des Volumenraums 13 nach unten stehende Rippen 61 vorhanden, die bei der Fixierung des Mischelements 1 in dem Gehäuse eines Akkumulators ein Gegenlager zur oberen Rippe 133 bilden. Das Mischelement 1 kann damit über die obere Rippe 133 und die nach unten hin stehenden Rippen 61, die in Richtung des Gehäusebodens bzw. eines Elektrodenplattenblocks des Akkumulators weisen, zwischen dem Gehäusedeckel und den Elektrodenplatten bzw. deren Separatoren eingeklemmt werden.

Zur horizontalen Fixierung und Positionierung weist das Mischelement jeweils an den Seitenwänden 131, 132 zu den Seiten hin fortstehende Rippen 134, 135 auf, die in Richtung zu Seitenwänden des Gehäuses des Akkumulators fortstehen. Des Weiteren befinden sich an einer der Rückwand 130 gegenüberliegenden Seite des Volumenraums 13 Rippen 136, 137, die in einer Draufsicht auf die Seite des Volumenraums 13, an der sie befestigt sind, jeweils paarweise V-förmig angeordnet sind. Zum vereinfachten Einführen des Mischelements 1 in das Gehäuse des Akkumulators von oben her sind die Rippen 61, 134, 135, 136, 137 nach unten hin verjüngend ausgebildet und weisen in diesem Bereich eine Abrundung auf.

Innerhalb der Einbuchtung 15 können an einander gegenüberliegenden Wänden 150, 151 des Volumenraums 13 jeweils nach außen weisende Rippen 152, 153 angeordnet sein, mit denen das Mischelement auf die Gehäuserippe 6 aufgeklemmt werden kann.

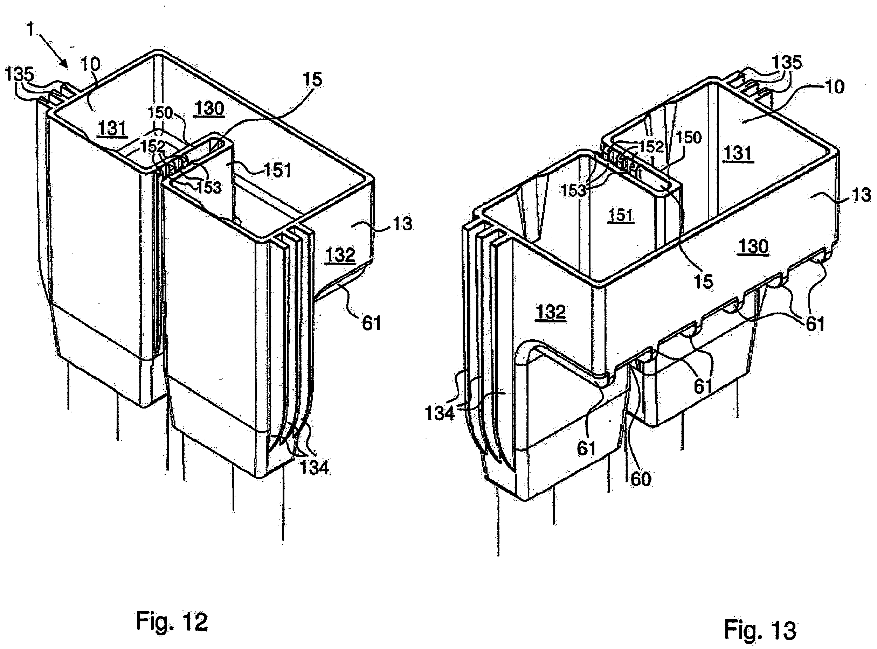

Die anhand der Figuren 10 und 11 beschriebenen diversen Rippen müssen bei dem Mischelement nicht immer vollständig und in den dargestellten Abmessungen realisiert sein. Vielmehr erlauben es die Rippen, das Mischelement an andere Gehäusebauformen von Akkumulatoren anzupassen, z.B. indem die Maße der Rippen verändert werden oder einzelne Rippen fortgelassen werden. Dies sei nachfolgend anhand einer alternativen Ausführungsform, die in den Figuren 12 und 13 dargestellt ist, beispielhaft erläutert.

Das Mischelement 1 gemäß den Figuren 12 und 13 weist nur die Rippen 61, 134, 135, 152, 153 auf. Hierbei sind die Rippen 61 mit einer geringeren Bauhöhe ausgebildet als bei den Figuren 10 und 11. Hierdurch kann das Mischelement z.B. in ein Gehäuse eingebaut werden, das eine geringere Bauhöhe aufweist als das Gehäuse, für das das Mischelement gemäß den Figuren 10 und 11 geeignet ist. Dies ist nachfolgend anhand der Figuren 14 bis 17 dargestellt.

Die Figur 14 und die Figur 17 zeigen einen Akkumulator jeweils in einer Seitenansicht mit Blick auf die Rückwand 130 des Volumenraums 13 des Mischelements 1, die Figuren 15 und 16 zeigen jeweils einen Blick auf die Seitenwand 131 bzw. 132. Hierbei ist in den Figuren 14 und 15 das Mischelement gemäß den Figuren 10 und 11 wiedergegeben, in den Figuren 16 und 17 das Mischelement gemäß den Figuren 12 und 13. Der Akkumulator gemäß den Figuren 14 und 15 weist ein Gehäuse mit größerer Bauhöhe auf als der Akkumulator in den Figuren 16 und 17. Erkennbar ist, dass das Mischelement jeweils auf eine Gehäuserippe 6 aufgesetzt ist und zwischen einem Elektrodenplattenblock 5 und einem Gehäusedeckel 100 des Akkumulators festgeklemmt und dadurch vertikal fixiert ist.

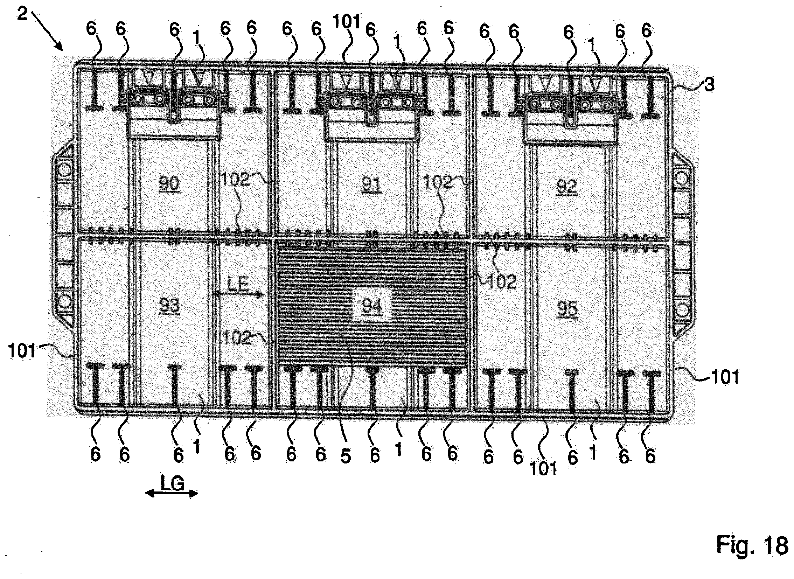

Die Figur 18 zeigt einen sechszelligen Akkumulator 2 in Draufsicht, wobei wiederum der Gehäusedeckel des Akkumulators noch nicht aufgesetzt ist. Erkennbar sind daher die sechs einzelnen Akkumulatorzellen 90, 91, 92, 93, 94, 95 mit den darin angeordneten Elektrodenplatten 5. Hierbei ist nur in dem Zellraum 94 beispielhaft ein Eiektrodenplattensatz 5 wiedergegeben. Erkennbar ist, dass die Eiektrodenplatten 5 sich hinsichtlich ihrer größten Abmessung LE in der gleichen Richtung erstrecken wie die größte Abmessung LG des Gehäuses 3 des Akkumulators 2. Erkennbar ist ferner, dass das Gehäuse 3 Gehäuserippen 6 aufweist. Beispielhaft ist ein auf eine Gehäuserippe 6 aufgestecktes Mischelement 1 in jedem Zellraum 90, 91, 92, 93, 94, 95 dargestellt. Das Gehäuse 3 des Akkumulators 2 weist dabei äußere Seitenwände 101 und Innenwände 102 auf. Durch die Innenwände 102 wird der Innenraum des Gehäuses 3 in Zellräume der Akkumulatorzellen 90, 91, 92, 93, 94, 95 aufgeteilt.

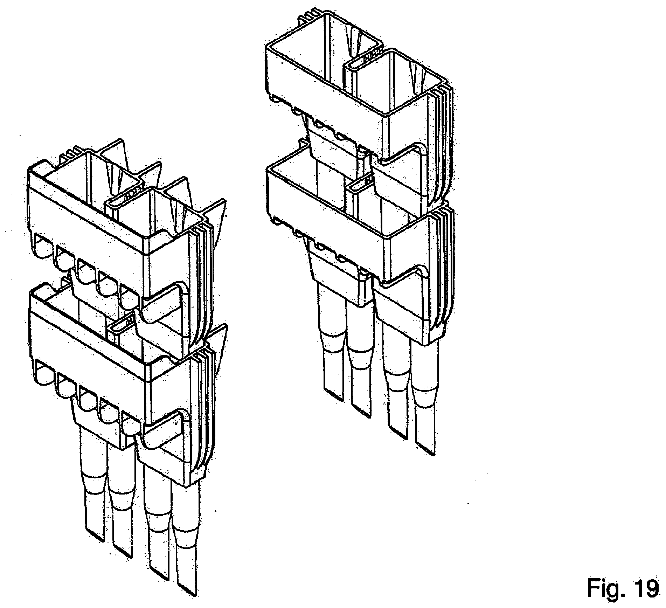

Die Figur 19 zeigt beispielhaft anhand der Mischelemente der Figuren 10 und 11 (links) und der Figuren 12 und 13 (rechts) die ineinander stapelbare Ausführung der Mischelemente 1. Hierdurch kann Platz gespart werden und die automatisierte Montage dar Mischelemente vereinfacht werden.

## Patentansprüche

1. Mischelement (1), das zum Einbau in ein Gehäuse (3) eines mit flüssigem Elektrolyten (7) betriebenen elektrochemischen Akkumulators (2) eingerichtet ist, um den Elektrolyten (7) in Folge von auf den Akkumulator (2) im Betrieb ausgeübten Kräften und/oder Bewegungen durchzumischen, wobei das Mischelement (1) als an gegenüberliegenden Endbereichen mit jeweils wenigstens einer Öffnung (10, 11, 14) versehener Hohlkörper ausgebildet ist, sodass in dem Hohlkörper ein Kanal gebildet ist, der in den gegenüberliegenden Endbereichen in die jeweilige wenigstens eine Öffnung (10, 11, 14) mündet und dort umlaufend vom Material des Mischelements (1) berandet ist, wobei das Mischelement (1) eine oder mehrere Befestigungs- und/oder Abstandsrippen (61, 133, 134, 135, 136, 137, 152, 153) aufweist, die von der Außenseite des Mischelements (1) fortstehen und zum Kontakt mit Gehäuseteilen des Akkumulators (2) eingerichtet sind, um das Mischelement (1) in dem Akkumulator (2) zu fixieren und/oder eine bestimmte Position des Mischelements (1) gegenüber den Gehäuseteilen festzulegen,
**dadurch gekennzeichnet, dass**
das Mischelement (1) zumindest an einer Seite des Hohlkörpers eine Einbuchtung (15) aufweist, die in Längsrichtung des Mischelements (1) verläuft und zur Aufnahme einer Gehäuserippe (6) des Gehäuses (3) des Akkumulators (2) eingerichtet ist.

2. Mischelement nach Anspruch 1,
**dadurch gekennzeichnet, dass**
das Mischelement (1) im Bereich eines oberen Endbereichs, der dazu eingerichtet ist, beim Einbau in das Gehäuse (3) oberhalb eines gegenüberliegenden unteren Endbereichs angeordnet zu sein, einen Volumenraum (13) aufweist, dessen Umfang erheblich größer ist als der Umfang darunterliegende Abschnitte des Mischelements (1), sodass die darunterliegenden Abschnitte des Mischelements (1) wenigstens einen im Vergleich zur Querschnittsfläche des Volumenraums (13) dünnen Strömungskanal (17) bilden.

3. Mischelement nach Anspruch 2,
**dadurch gekennzeichnet, dass**
sich der Umfang des Hohlkörpers im Bereich des dünnen Strömungskanals (17) unterhalb eines Übergangs (60) von dem Volumenraum (13) in den dünnen Strömungskanal (17) in Richtung zum unteren Endbereich hin verringert.

4. Mischelement nach einem der vorhergehenden Ansprüche,
**dadurch gekennzeichnet, dass**
das Mischelement (1) als im Spritzgussverfahren mit einem Innendorn und einer Außenform, im Blasverfahren oder im Tiefziehverfahren hergestellter Hohlkörper ausgebildet ist.

5. Mischelement nach einem der vorhergehenden Ansprüche,
**dadurch gekennzeichnet, dass**
das Mischelement (1) wenigstens eine in Richtung zum Gehäusedeckel (100) des Gehäuses (3) des Akkumulators (2) fortstehende Befestigungs- und/oder Abstandsrippe (61, 133, 134, 135, 136, 137, 152, 153) aufweist.

6. Mischelement nach einem der vorhergehenden Ansprüche,
**dadurch gekennzeichnet, dass**
das Mischelement (1) wenigstens eine in Richtung zum Gehäuseboden (107) des Gehäuses (3) des Akkumulators (2) fortstehende Befestigungs- und/oder Abstandsrippe (61, 133, 134, 135, 136, 137, 152, 153) aufweist.

7. Mischelement nach einem der vorhergehenden Ansprüche, **dadurch gekennzeichnet, dass** das Mischelement (1) am Außenumfang an einer, mehreren oder allen seinen zu Seitenwänden (101, 102) des Gehäuses (3) des Akkumulators (2) gerichteten Außenseiten eine oder mehrere Befestigungs- und/oder Abstandsrippen (61, 133, 134, 135, 136, 137, 152, 153) aufweist.

8. Mischelement nach einem der vorhergehenden Ansprüche,
**dadurch gekennzeichnet, dass**
eine oder mehrere Befestigungs- und/oder Abstandsrippen (61, 133, 134, 135, 136, 137, 152, 15) innerhalb der Einbuchtung (15) angeordnet sind, insbesondere an einander gegenüberliegenden Außenseiten des Mischelements (1) innerhalb der Einbuchtung (15).

9. Mischelement nach einem der vorhergehenden Ansprüche,
**dadurch gekennzeichnet, dass**
wenigstens zwei Befestigungs- und/oder Abstandsrippen (61, 133, 134, 135, 136, 137, 152, 15) paarweise V-förmig zueinander angeordnet sind.

10. Sortiment von Mischelementen (1) nach einem der vorhergehenden Ansprüche,
**dadurch gekennzeichnet, dass**
das Sortiment verschieden ausgebildete Mischelemente (1) aufweist, die sich durch die Anordnung und/oder die Maße der Befestigungs- und/oder Abstandsrippen (61, 133, 134, 135, 136, 137, 152, 15) voneinander unterscheiden.

11. Akkumulator (2) mit einem Gehäuse (3), in dem wenigstens eine Akkumulatorzelle (90, 91, 92, 93, 94, 95) gebildet ist, wobei die Akkumulatorzelle (90, 91, 92, 93, 94, 95) eine Vielzahl von plattenförmigen Elektroden (5), die nebeneinander in der Akkumulatorzelle (90, 91, 92, 93, 94, 95) angeordnet sind, sowie flüssigen Elektrolyten (7) aufweist, wobei in der Akkumulatorzelle (90, 91, 92, 93, 94, 95) zusätzlich in einem Freiraum wenigstens ein Mischelement (1) nach einem der Ansprüche 1 bis 9 angeordnet ist.

12. Akkumulator nach Anspruch 11,
**dadurch gekennzeichnet, dass**
sich das Mischelement (1) mindestens soweit nach oben erstreckt, dass bei spezifikationsgemäßer Bewegungsbeanspruchung des Akkumulators (2) ein Überfließen von flüssigem Elektrolyten (7) über den oberen Randbereich des Mischelements (1) verhindert ist.

## Claims

1. Mixing element (1) which is designed for installation in a housing (3) of an electrochemical accumulator (2), which is operated with a liquid electrolyte (7), in order to thoroughly mix the electrolyte (7) as a result of forces and/or movements which are exerted on the accumulator (2) during operation, wherein the mixing element (1) is in the form of a hollow body which is provided with at least one opening (10, 11, 14) at opposite end regions in each case, so that a channel is formed in the hollow body, which channel issues into the respective at least one opening (10, 11, 14) in the opposite end regions and there is bordered in a peripheral manner by the material of the mixing element (1), wherein the mixing element (1) has one or more fastening and/or spacer ribs (61, 133, 134, 135, 136, 137, 152, 153) which project from the outer side of the mixing element (1) and are designed for contact with housing parts of the accumulator (2) in order to fix the mixing element (1) in the accumulator (2) and/or to define a specific position of the mixing element (1) in relation to the housing parts, **characterized in that**
the mixing element (1) has a recess (15) at least on one side of the hollow body, which recess runs in the longitudinal direction of the mixing element (1) and is designed for receiving a housing rib (6) of the housing (3) of the accumulator (2).

2. Mixing element according to Claim 1,
**characterized in that**
the mixing element (1), in the region of an upper end region which is designed to be arranged above an opposite lower end region when installed in the housing (3), has a volume space (13) of which the periphery is considerably larger than the periphery sections of the mixing element (1) which are situated therebeneath, so that the sections of the mixing element (1) which are situated therebeneath form at least one flow channel (17) which is thin in comparison to the cross-sectional area of the volume space (13).

3. Mixing element according to Claim 2,
**characterized in that**
the periphery of the hollow body in the region of the thin flow channel (17) beneath a transition (60) from the volume space (13) into the thin flow channel (17) reduces in the direction towards the lower end region.

4. Mixing element according to one of the preceding claims, **characterized in that**
the mixing element (1) is in the form of a hollow body which is produced by an injection-moulding method with an inner mandrel and an outer mould, by a blow-moulding method or by a thermoforming method.

5. Mixing element according to one of the preceding claims, **characterized in that**
the mixing element (1) has at least one fastening and/or spacer rib (61, 133, 134, 135, 136, 137, 152, 153) which projects in the direction of the housing cover (100) of the housing (3) of the accumulator (2).

6. Mixing element according to one of the preceding claims, **characterized in that**
the mixing element (1) has at least one fastening and/or spacer rib (61, 133, 134, 135, 136, 137, 152, 153) which projects in the direction of the housing base (107) of the housing (3) of the accumulator (2).

7. Mixing element according to one of the preceding claims, **characterized in that**
the mixing element (1) has one or more fastening and/or spacer ribs (61, 133, 134, 135, 136, 137, 152, 153) on the outer periphery on one, several or all of its outer sides which are directed towards side walls (101, 102) of the housing (3) of the accumulator (2).

8. Mixing element according to one of the preceding claims, **characterized in that**
one or more fastening and/or spacer ribs (61, 133, 134, 135, 136, 137, 152, 153) are arranged within the recess (15), in particular on opposite outer sides of the mixing element (1) within the recess (15).

9. Mixing element according to one of the preceding claims, **characterized in that**
at least two fastening and/or spacer ribs (61, 133, 134, 135, 136, 137, 152, 153) are arranged in pairs in a V-shape in relation to one another.

10. Range of mixing elements (1) according to one of the preceding claims, **characterized in that**
the range has mixing elements (1) of different design which are distinguished from one another by the arrangement and/or the dimensions of the fastening and/or spacer ribs (61, 133, 134, 135, 136, 137, 152, 153).

11. Accumulator (2) comprising a housing (3) in which at least one accumulator cell (90, 91, 92, 93, 94, 95) is formed, wherein the accumulator cell (90, 91, 92, 93, 94, 95) has a large number of plate-like electrodes (5), which are arranged next to one another in the accumulator cell (90, 91, 92, 93, 94, 95), and also liquid electrolytes (7), wherein at least one mixing element (1) according to one of Claims 1 to 9 is additionally arranged in a free space in the accumulator cell (90, 91, 92, 93, 94, 95).

12. Accumulator according to Claim 11,
**characterized in that**
the mixing element (1) extends upwards at least to such an extent that, in the event of movement loading of the accumulator (2) in accordance with specifications, overflowing of liquid electrolyte (7) over the top edge region of the mixing element (1) is prevented.

## Revendications

1. Elément de mélange (1) qui est prévu pour être installé dans un boîtier (3) d'un accumulateur électrochimique (2) fonctionnant avec un électrolyte liquide (7), pour mélanger l'électrolyte (7) sous l'effet de forces et/ou de mouvements appliqués sur l'accumulateur (2) pendant le fonctionnement, l'élément de mélange (1) étant réalisé sous la forme de corps creux pourvu, au niveau de régions d'extrémité opposées, à chaque fois d'au moins une ouverture (10, 11, 14), de telle sorte qu'un canal soit formé dans le corps creux, lequel débouche dans les régions d'extrémité opposées dans l'au moins une ouverture respective (10, 11, 14) et est bordé à cet endroit sur le pourtour par le matériau de l'élément de mélange (1), l'élément de mélange (1) présentant une ou plusieurs nervures de fixation et/ou d'espacement (61, 133, 134, 135, 136, 137, 152, 153) qui se prolongent depuis le côté extérieur de l'élément de mélange (1) et qui sont prévues pour venir en contact avec des parties de boîtier de l'accumulateur (2) afin de fixer l'élément de mélange (1) dans l'accumulateur (2) et/ou de fixer une position déterminée de l'élément de mélange (1) par rapport aux parties de boîtier,
**caractérisé en ce que**
l'élément de mélange (1) présente au moins au niveau d'un côté du corps creux un renfoncement (15) qui s'étend dans la direction longitudinale de l'élément de mélange (1) et qui est prévu pour recevoir une nervure de boîtier (6) du boîtier (3) de l'accumulateur (2).

2. Elément de mélange selon la revendication 1,
**caractérisé en ce que**
l'élément de mélange (1), dans la région d'une région d'extrémité supérieure qui est prévue lors de l'installation dans le boîtier (3) pour être disposée au-dessus d'une région d'extrémité inférieure opposée, présente un volume physique (13) dont le pourtour est substantiellement plus grand que le pourtour de portions sous-jacentes de l'élément de mélange (1), de telle sorte que les portions sous-jacentes de l'élément de mélange (1) forment au moins un canal d'écoulement mince (17) par rapport à la surface en section transversale du volume physique (13).

3. Elément de mélange selon la revendication 2,
**caractérisé en ce que**
le pourtour du corps creux dans la région du canal d'écoulement mince (17) en dessous d'une transition (60) du volume physique (13) au canal d'écoulement mince (17) se rétrécit dans la direction de la région d'extrémité inférieure.

4. Elément de mélange selon l'une quelconque des revendications précédentes,
**caractérisé en ce que**
l'élément de mélange (1) est réalisé sous la forme d'un corps creux fabriqué par un procédé de moulage par injection, avec un mandrin intérieur et un moule extérieur, par un procédé de soufflage ou par un procédé d'emboutissage profond.

5. Elément de mélange selon l'une quelconque des revendications précédentes,
**caractérisé en ce que**
l'élément de mélange (1) présente au moins une nervure de fixation et/ou d'espacement (61, 133, 134, 135, 136, 137, 152, 153) qui se prolonge dans la direction du couvercle de boîtier (100) du boîtier (3) de l'accumulateur (2).

6. Elément de mélange selon l'une quelconque des revendications précédentes,
**caractérisé en ce que**
l'élément de mélange (1) présente au moins une nervure de fixation et/ou d'espacement (61, 133, 134, 135, 136, 137, 152, 153) qui se prolonge dans la direction du fond de boîtier (107) du boîtier (3) de l'accumulateur (2).

7. Elément de mélange selon l'une quelconque des revendications précédentes,
**caractérisé en ce que**
l'élément de mélange (1) présente, au niveau de la périphérie extérieure, au niveau d'un, de plusieurs, ou de tous ses côtés extérieurs orientés vers des parois latérales (101, 102) du boîtier (3) de l'accumulateur (2), une ou plusieurs nervures de fixation et/ou d'espacement (61, 133, 134, 135, 136, 137, 152, 153).

8. Elément de mélange selon l'une quelconque des revendications précédentes,
**caractérisé en ce que**
qu'une ou plusieurs nervures de fixation et/ou d'espacement (61, 133, 134, 135, 136, 137, 152, 153) sont disposées à l'intérieur du renfoncement (15), en particulier au niveau de côtés extérieurs opposés les uns aux autres de l'élément de mélange (1) à l'intérieur du renfoncement (15).

9. Elément de mélange selon l'une quelconque des revendications précédentes,
**caractérisé en ce que**
qu'au moins deux nervures de fixation et/ou d'espacement (61, 133, 134, 135, 136, 137, 152, 153) sont disposées par paires en forme de V l'une par rapport à l'autre.

10. Ensemble d'éléments de mélange (1) selon l'une quelconque des revendications précédentes,
**caractérisé en ce que**
l'ensemble présente des éléments de mélange (1) réalisés différemment, qui se distinguent par l'agencement et/ou la dimension des nervures de fixation et/ou d'espacement (61, 133, 134, 135, 136, 137, 152, 153) les unes par rapport aux autres.

11. Accumulateur (2) comprenant un boîtier (3) dans lequel est formée au moins une cellule d'accumulateur (90, 91, 92, 93, 94, 95), la cellule d'accumulateur (90, 91, 92, 93, 94, 95) présentant une pluralité d'électrodes en forme de plaque (5) qui sont disposées les unes à côté des autres dans la cellule d'accumulateur (90, 91, 92, 93, 94, 95), ainsi qu'un électrolyte liquide (7), dans la cellule d'accumulateur (90, 91, 92, 93, 94, 95) au moins un élément de mélange (1) selon l'une quelconque des revendications 1 à 9 étant en outre disposé dans un espace libre.

12. Accumulateur selon la revendication 11,
**caractérisé en ce que**
l'élément de mélange (1) s'étendant vers le haut au moins dans une mesure telle que pour une exigence de déplacement de l'accumulateur (2) conforme aux spécifications, un débordement de l'électrolyte liquide (7) par-dessus la région de bord supérieure de l'élément de mélange (1) soit empêché.
